# EUROPEAN PATENT SPECIFICATION

(11) **EP 2 461 581 B1**
(45) Date of publication and mention of the grant of the patent: **24.10.2018**
(21) Application number: 10306335.0
(22) Date of filing: 01.12.2010
(51) Int. Cl.: H04N 7/173, H04N 21/4408, H04N 21/242, H04N 21/443

(54) **Device and method for content delivery adapted for synchronous playbacks**
Vorrichtung und Verfahren zur auf synchrone Wiedergabe angepasste Inhaltszustellung
Dispositif et procédé pour la fourniture de contenus adaptés pour des lectures synchrones

(43) Date of publication of application: 06.06.2012
(73) Proprietor: Thomson Licensing, 92130 Issy-les-Moulineaux (FR)
(72) Inventor: Bichot, Guillaume, 35576, CESSON SEVIGNE (FR); Legallais, Yvon, 35576, CESSON SEVIGNE (FR); Howson, Christopher, 35576, CESSON SEVIGNE (FR)
(74) Representative: Vidon Brevets & Stratégie

(56) References cited:
- EP-A1- 2 164 222
- WO-A2-2006/006026
- US-A1- 2006 156 375

## Description

### Field Of The Invention

The invention relates to the field of content delivery adapted for synchronous content playback by terminals connected to a server delivering simultaneously said content to said terminals via networks having different data delivery duration generating different delivery delays.

### Background Of The Invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Nowadays, regarding broadcast TV, a broadcaster such as TF1 or M6 in France is not attached to a single broadcast feed. The broadcaster can distribute its live programs simultaneously through several pipes such as Internet Protocol Television (IPTV), or Digital Terrestrial Television (DTT or DDTV), satellite, and even over the worldwide web. One problem is that all these pipes use different network technologies generating very different delivery delays. This may result in a strange user experience such as when a TV spectator is watching a soccer match delivered over his broadband IPTV service and he may hear a joyous explosion from his neighbourhood, reacting to a goal if for example a said neighbourhood is probably watching the same program but delivered through the DTT network. Said TV spectator will see the goal too but it may happen several seconds afterwards. More annoying is the case of interactive programs (e.g. a quiz show) where the competitors (TV spectators located in different homes) are not equally treated depending on their TV feed. Overall the delay difference among all the TV delivery networks is typically several seconds. The broadcaster doesn't wish to handle a complex delivery taking into account the different delivery delays of various used pipes.

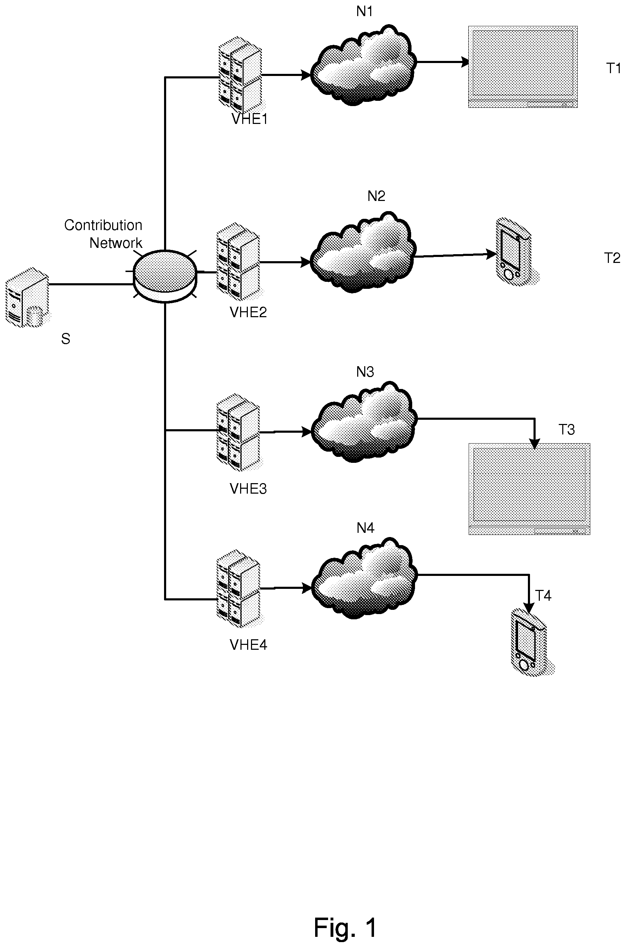

A classical delivery system is represented in figure 1. It comprises four terminals T1, T2, T3, T4 and a server S connected through four various networks N1, N2, N3, N4 such as for example: Satellite, Cable, digital terrestrial TV, broadband IPTV, on demand, Internet etc .... Four Head-ends devices VHE1, VHE2, VHE3, VHE4 are adapted for formatting the content as proposed by the broadcaster (not represented on fig. 1) for being delivered to said terminals for quasi-simultaneous playbacks. As explained above, there can be delays of about 10 second between the playbacks on standard/basic terminals.

When terminals are not especially adapted for simultaneous playbacks, one will speak of "basic terminals". Said basic terminals start playing back the delivered content as soon as said content reaches the terminal. But the data delivery durations on the various links, from said server S to said terminals, are not necessarily identical. This variability of data delivery durations introduces delays (up to 10 seconds) between the playbacks performed by all the terminals. This may be problematic when synchronization among terminal users is a strong requirement such as for interactive programs (e.g. TV quiz show wherein terminal users are invited to answer questions in live) or for live events such as a soccer match.

This problem is known and solved by van Deventer et al. in "Advanced Interactive Television Services Require Content Synchronization" appearing in Systems, Signals and Image Processing, 2008. IWSSIP 2008. 15th International Conference , 25-28 June 2008. Van Deventer et al. propose to handle delivery duration variability with synchronization buffers located either in network or at terminals. The proposed solution is not fully described and is silent on the way the modified basic terminal could implement said feature and particularly it is silent on the complexity of the operation for the broadcaster in terms of supplying of synchronisation signals and especially on the problems of deployment of such solution in a world where most of terminals are basic terminals.

One of the goals of the present invention is to propose a solution for synchronizing the rendering of a program delivered simultaneously over different networks which would be simple to manage by the broadcaster in charge of supplying content to various terminals via various networks and last but not least which would be compliant with existing "basic terminals".

Patent application EP 2164222 A1 describes a synchronization method for a delivery network comprising a plurality of access nodes each of them having a different delivering delay. The method describes a synchronization mechanism wherein the varying delay is measured for each access node and compensated into a variable delay buffers, so that the originally transmitted stream is transmitted to all terminals of a group at the same time. Patent application EP 2164222 A1 however does not describe how to deliver data towards different networks. Patent application EP 2164222 A1 also assumes all devices are compatible with the disclosed method, and is silent on how to introduce a new synchronized play back mechanism for new devices connected to the same network as legacy devices.

### Summary Of The Invention

The invention is defined by the appended claims.

### Brief Description Of The Drawings

The invention will be better understood and illustrated by means of the following embodiments and execution examples, in no way limitative, with reference to the appended figures on which:
Figure 1 represents a system for delivering of a content to four terminals connected over four different network pipes, this figure is described above;
Figure 2a represents a structure of data according to an embodiment comprising a first association and a second association, both associations being composed at the server S before a simultaneous delivery to terminals T1, T2, T3, T4 over the networks;
Figure 2b illustrates effects of the different data delivery duration on arrival time of the first and second association at the terminals T1, T2, T3, T4;
Figure 3a illustrates also the arrival time of the first and second association at the terminals T1, T2, T3, T4;
Figure 3b illustrates in a temporal diagram how said first associations are played back at terminals T1, T2, T3, T4 when said terminals operate in a so-called "non-interactive mode";
Figure 3c illustrates in a temporal diagram how said second associations are played back at terminals T1, T2, T3, T4 when said terminals operate in a so-called "interactive mode";
Figure 4, represents a flow chart of a method for delivering a content to terminals for synchronous playbacks of said content onto said terminals, according to an embodiments;
Figure 5, represents a flow chart of the method for playing-back synchronously a content on terminals.

### Detailed Description Of Preferred Embodiments

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

An embodiment is described, which corresponds to a situation where a broadcaster prepares and delivers a content CNT located on a server S such that whatever the network N1, N2, N3, N4 used for delivery said content CNT can reach terminals adapted for playing back essentially simultaneously said content CNT and/or basic terminals. This also applies to terminals which can select the mode of playback operation among a first mode of operation later called "interactive" for signalling it is configured for a synchronous playback and a second mode of operation later called "non interactive" in which playback operations are similar to the playback operations performed on basic terminals.

An advantage of the invention is then to be adapted for delivering content to all categories of terminals.

By "content", it is meant an audio/video program dedicated to continuous playback at constant speed, e.g. a soccer match or a TV quiz. The program can be pre-recorded and distributed at a particular time or it can be live.

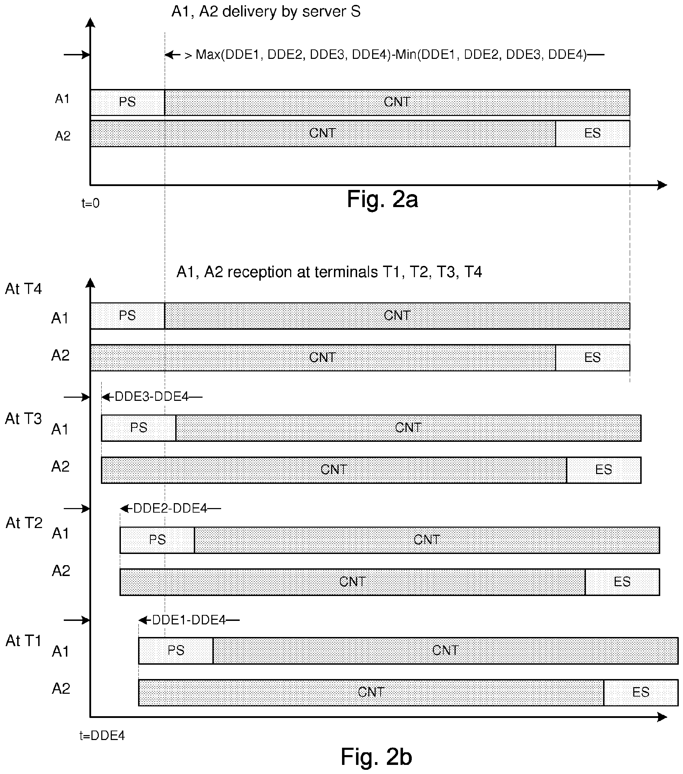

As shown on figure 2, the broadcaster associates into a first association A1 a content CNT to a preamble sequence PS. Both the content CNT and the preamble sequence PS are adapted for being played back by any terminal. The first association A1 is adapted for being played back by a terminal operating according to said non-interactive mode (or by any basic terminal). That means the association A1 playback starts immediately after the terminal starts to receive said first association A1.

Said preamble sequence PS is temporally positioned in said first association such that the terminal receiving said first association plays-back said preamble sequence PS entirely before said content. As soon as the playback of the preamble sequence PS ends, the content playback starts. The content playback is delayed by the playback duration of the preamble sequence PS as shown on fig. 2b.

The broadcaster assigns to the preamble sequence PS a playback duration greater than or equal to the largest difference between all the data delivery durations over the available delivery networks. Said preamble sequence is prepared by the broadcaster. This assignation van be realized after

By "preamble sequence", it is meant an audio/video program dedicated to a continuous playback at constant speed, partially or in totality for delaying the content playback. The audio/video program of the preamble sequence PS is pre-recorded. The preamble sequence PS can include data or metadata related to the associated content CNT, for example a title of said content, credits of said contents, still images, bonus etc ..

In another embodiment, the preamble sequence PS can include advertisement messages.

As shown on fig. 2a, the broadcaster further associates into a second association A2 said content CNT to an ending sequence ES also adapted for being played back by a terminal.

Said ending sequence ES is temporally positioned in said second association A2 such that the terminal receiving said second association plays-back said content CNT before said ending sequence ES. The second association A2 is adapted for being played back exclusively by a terminal operating according to said interactive mode.

Advantageously, the playback duration of the ending sequence ES is equal to the playback duration of the preamble sequence PS for facilitating the task of the broadcaster who has to deliver the first and the second association into a single transport stream.

At the server S, the broadcaster stores estimations DDE1, DDE2, DDE3, DDE4 of data delivery duration from the server S to each of the terminals T1, T2, T3, T4 respectively over said networks N1, N2, N3, N4. For example, these estimations are supplied by content diffusers.

The broadcaster further inserts said estimations DDE1, DDE2, DDE3, DDE4 in at least one of said first and second association A1, A2 and delivers second association A2 essentially simultaneously to terminals T1, T2, T3, T4 via the networks N1, N2, N3, N4. These insertions can be made as an auxiliary stream that means the insertions are periodically temporally repeated into said at least one of said first and second association A1, A2. This could, by example allow to update said estimations when the content diffusers supplies such estimation updates.

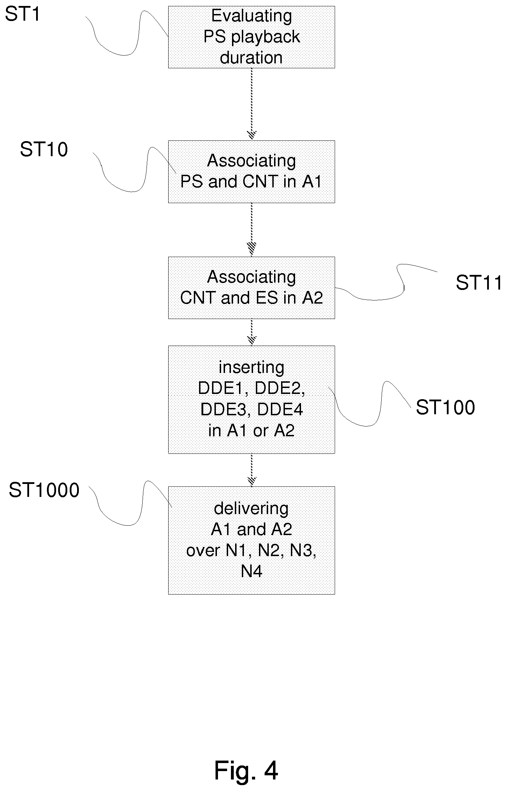

As a summary of the operations performed at the server S by the broadcaster, fig. 4 shows the main steps of the method for delivering content to at least two terminals T1, T2, T3, T4 for synchronous playbacks of said content onto said terminals according to said embodiment.

Step ST1 consists in evaluating a playback duration of a preamble sequence PS, wherein said playback duration is determined for being greater than or equal to the largest difference between said estimations DDE1, DDE2, DDE3, DDE4. The preamble sequence PS is adapted for being played back by said terminals T1, T2, T3, T4; This step can be avoided by assigning to the preamble sequence PS a duration which is empirically greater than all estimation of delivery duration : for example the preamble sequence PS playback duration is set to 30 seconds.

Step ST10 consists in associating into a first association A1 said content CNT to said preamble sequence PS. The preamble sequence PS is temporally positioned in said first association A1 such that a terminal T1, T2, T3, T4 playing back said first association A1 will plays-back successively entirely said preamble sequence PS and continuously said content;

Step ST11 consists in associating into a second association A2 said content CNT to an ending sequence ES. The ending sequence ES has a playback duration for example identical to the playback duration of the preamble sequence PS and is temporally positioned in said second association A2 such that a terminal playing back said second association A2 will play-back said content CNT before said ending sequence ES.

Step ST100 consists in inserting said estimations DDE1, DDE2, DDE3, DDE4 at least one of said first and second association A1, A2.

Advantageously, step ST100 involves a step of inserting ST100 an arbitrary duration value T in said at least one of said first and second association A1, A2.

The interest of said arbitrary duration value T will be explained below.

Step ST1000 consists in delivering said first and second association A1 A2 to said terminals T1, T2, T3, T4 via said at least one network N1, N2, N3, N4. This delivery is essentially simultaneous.

Advantageously, said first and second association A1, A2 are delivered to a specific terminal T1, T2, T3, T4 through a single network N1, N1, N3, N4.

The signal structure comprising a first and second association A1, A2 is transparent for any head-end device VHE1, VHE2, VHE2, VHE4 which is usually adapted for formatting any data incoming on the associated network it is connected to. No adaptation is needed for addressing the content CNT to basic terminals either to terminals adapted for operating in interactive mode.

On figure 2b, one depicts the variability of data delivery duration which generates variability in the arrival time of the data at terminals T1, T2, T3, T4. In the representation of figure 2b, the x-axis represents the time and the origin is set at time DDE4 by considering the first and second associations A1, A2 are sent at date t=0. One will state that the data delivery duration from the server S to the terminal Ti is longer than the data delivery duration from the server S to the terminal Ti+1 where i is an index comprised between 1 and 4. In other words, if estimations of data delivery duration from server S to terminals Ti, is respectively named DDEi, one would have DDE1 > DDE2 > DDE3 > DDE4.

Then, it is clear from fig. 2b that the first and second association A1, A2 are received by the terminal T4 at a date DDE4, the first and second association A1, A2 are received by the terminal T3 with a data delivery delay to said reception corresponding to DDE3 - DDE4.

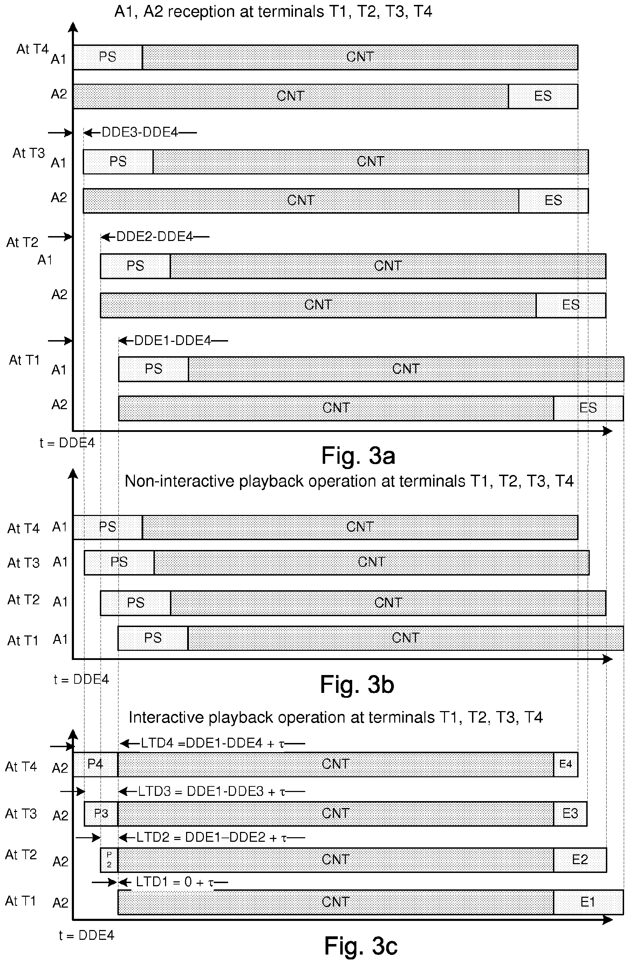

One will present the playback operations at basic terminals or at terminals operating in said "non-interactive mode" from the temporal representation shown on figure 3b.

For the sake of clarity playback operations (synchronous and not synchronous) are shown in view with Fig. 3a which represents the various arrival times of the first and second association A1, A2 at terminals. Fig.3a is similar to fig. 3a.

The basic terminals or the terminals operating in a non-interactive mode start the data playback as soon as they receive the data. Whatever over which network N1, N2, N3, N4 the basic terminal is connected to the server S; the terminal has to playback the whole preamble sequence before playing the content. Then, in any case the playback of content CNT can start at the earliest after the end of the play-back of the preamble sequence PS: at least DDE1-DDE4 after terminal T4 the first association A1 reception start.

One will now present the operations at terminals operating in the so-called interactive mode from the temporal representation shown on figure 3c.

As recalled above, the first and second association A1, A2 arrives with various delays on terminals. For getting a synchronous content playback on all terminals, one has to start the playback on all terminals at a date which is later than the latest reception of the first and second association A1, A2. It is advantageous that this playback start happens also before the start of quickest playback start in non-synchronous mode for advantaging the owner of terminals adapted for operating in interactive mode. In doing so the owner of terminals adapted for operating in interactive mode will mandatorily watch the content played back on its terminal shortly before any owner of a basic terminal.

In the example shown on figure 3c, the playback of the second association A2, then the content playback, is delayed with a local temporization duration LTD4 equal to DDE1-DDE4 + τ. Where τ is an arbitrary duration value also inserted in the second association A2. For the sake of clarity τ is set to 0 on fig. 3c.

Said arbitrary duration value τ represents a margin for handling a situation where a terminal T0 connected over a network N0 to the server S has a data delivery duration DDE0 greater than DDE1 (T0 and N0 are not represented on fig. 1). In this particular case, the arbitrary duration value τ is adapted for delivering the first and second association to the terminals T0, T1, T2, T3, T4 without modifying the first and second association A1, A2 build when the broadcaster didn't know this slow network N0.

Advantageously, during said local temporization, the terminal plays-back a part of the preamble sequence PS received through the first association A1.

As shown on fig. 3c, terminal T4 receives first the preamble sequence PS at date DDE4. Here, terminal T4 plays-back the whole preamble sequence PS as an introductory temporization program P4 as soon as it receives the preamble sequence PS through the first association A1.

Terminals T3, T2, T1 playback a part of the preamble sequence PS as an introductory temporization program P3, P2, P1 as soon as they receive it through the first association A1. The duration of said introductory temporization program P4, P3, P2, P1 is adapted such that the content playback starts respectively at a duration LTD4, LTD3, LTD2, LTD1 after the start of first and second association A1, A2 reception by the terminal T4, T3, T2, T1. Where LTD4 = DDE1-DDE4 + τ, LTD3 = DDE1-DDE3 + τ, LTD2 = DDE1-DDE2 + τ, LTD1 = τ.

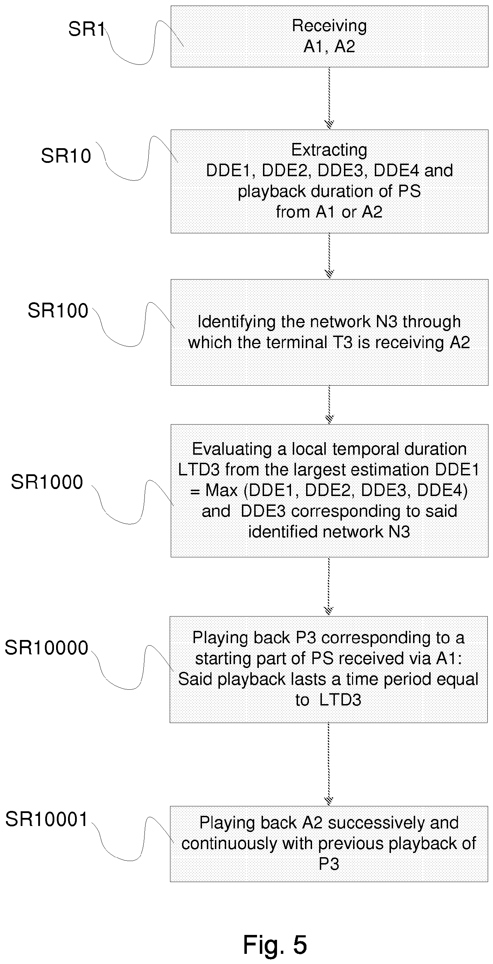

As an exemplary summary of the playback operations performed at terminals, figure 5 shows the main steps of the method for playing-back a content in a interactive mode by the terminal T3 connected over the network N3 when the content is delivered according to the embodiment of the method for delivering presented above:
Step SR1 consists in receiving said first and second association A1, A2 by said terminal T3 via said network N3;
Step SR10 consists in extracting the estimations DDE1, DDE2, DDE3, DDE4; of data delivery duration from the server S to each of the terminals T1, T2, T3, T4 over said networks N1, N2, N3, N4 and the preamble sequence playback duration.
Step SR100 consists in identifying the network N3 through which said terminal T3 is receiving said first and second association A1, A2;
Step SR1000 consists in evaluating a local temporization duration LTD3, from the largest estimations DDE1 and the estimation DDE3 corresponding to said identified network N3;

As disclosed above LTD3 is for example expressed as LTD3 = DDE1 - DDE3 + τ.

Step SR10000 consists in starting a playback of an introductory temporization program P3 as soon as the first and second association A1, A2 are received. This playback duration is equal to LTD3.

Said introductory temporization program P3 corresponds to the starting part of the preamble sequence PS received via the first association A1. If

As shown on fig.3 the durations of the introductory temporization program P1, P2, P3, P4 are all different on the terminals connected over different networks and can be null (cf. the duration of introductory temporization program P1 on the terminal T1).

The introductory temporization program P3 playback is followed by the second association A2 playback which comprises successively the content CNT and the ending sequence ES.

Step SR10001 consists in interrupting the second association playback when the whole playback duration is equal to the duration of the content playback plus the preamble sequence playback duration.

An ending temporization program E3 is played-back during the remaining time for reaching the duration of the content playback plus the preamble sequence playback duration.

Said ending temporization program E1, E2, E3, E4 corresponds to the starting part of the ending sequence ES received via the second association A2. As shown on fig.3 the durations of the ending temporization program E1, E2, E3, E4 are all different and can be equal to the plus the ending sequence playback duration (cf. the duration of ending temporization program E1 on the terminal T1).

References disclosed in the description, the claims and the drawings may be provided independently or in any appropriate combination. Features may, where appropriate, be implemented in hardware, software, or a combination of the two.

The scope of the invention is limited by the appended claims.

Reference numerals appearing in the claims are by way of illustration only and shall have no limiting effect on the scope of the claims.

## Claims

1. Method for delivering a content (CNT) to at least two terminals (T1, T2, T3, T4) for playback of said content (CNT) onto said at least two terminals (T1, T2, T3, T4), each of at least two terminals (T1, T2, T3, T4) being connected over a server (S) through at least one network (N1, N2, N3, N4), and operating according to at least one of a first mode of operation and a second mode of operation, **characterized in that**, at said server (S), it involves the steps of:
- providing (ST10) a first association (A1) of said content (CNT) to a preamble sequence (PS), said preamble sequence (PS) being temporally positioned in said first association (A1) such that a terminal (T1, T2, T3, T4) playing back said first association (A1) plays-back successively and continuously said preamble sequence (PS) and said content (CNT);
- providing (ST11) a second association (A2) of said content (CNT) to an ending sequence (ES), said ending sequence (ES) being temporally positioned in said second association (A2) such that a terminal (T1, T2, T3, T4) playing back said second association (A2) plays-back successively and continuously said content (CNT) and said ending sequence (ES);
- providing (ST100) estimations (DDE1, DDE2, DDE3, DDE4) of data delivery duration from said server (S) to each of the at least two terminals (T1, T2, T3, T4) via said at least one network (N1, N2, N3, N4), and a playback duration of said preamble sequence (PS) in at least one of said first and second association (A1, A2);
- delivering (ST1000) said first association (A1) and second association (A2) simultaneously to each of said at least two terminals (T1, T2, T3, T4), via a single respective network among said at least one network (N1, N2, N3, N4);
wherein said playback duration of the preamble sequence (PS) is greater than or equal to the largest difference between said estimations (DDE1, DDE2, DDE3, DDE4),
wherein each terminal operating according to said first mode of operation, upon receiving the first association, uses said estimations of data delivery duration to determine a local temporization duration and playback successively and continuously said preamble sequence of the first association for said local temporization duration followed by said second association,
wherein the terminals operating according to the second mode of operation, upon receiving the first association, playback the first association, and wherein the local temporization duration is calculated to compensate the differences between the estimations (DDE1, DDE2, DDE3, DDE4) of data delivery duration to the at least two terminals.

2. Method according to claim 1, wherein said preamble sequence (PS) and said ending sequence (ES) have an identical playback duration.

3. Method according to any one of claims 1 to 2, wherein said preamble sequence (PS), said ending sequence (ES) and said content (CNT) are audio programs or programs combining audio and video.

4. Method according to anyone of claims 1 to 3, wherein it involves a step of providing (ST100) an arbitrary duration value (T) in said at least one of said first and second association (A1, A2).

5. Method for playing-back a content (CNT) by a terminal (T1, T2, T3, T4) connected over at least one network (N1, N2, N3, N4) to a server (S) delivering said content (CNT), said terminal (T1, T2, T3, T4) operating according to at least one of a first mode of operation and a second mode of operation, said terminal (T1, T2, T3, T4) receiving through a single network (N1, N2, N3, N4) a first association (A1) and a second association (A2), said first association (A1) gathering a preamble sequence (PS) and said content (CNT), said preamble sequence (PS) being temporally positioned in said first association (A1) such that when said terminal (T1, T2, T3, T4) plays back said first association (A1), it plays-back successively and continuously said preamble sequence (PS) and said content (CNT), said second association (A2) gathering said content (CNT) and an ending sequence (ES), said ending sequence (ES) being temporally positioned in said second association (A2) such that when said terminal (T1, T2, T3, T4) plays back said second association (A2), it plays-back successively and continuously said content (CNT) and said ending sequence (ES), wherein one of said first or second association (A1, A2) further comprises estimations (DDE1, DDE2, DDE3, DDE4) of data delivery duration from said server (S) to terminals (T1, T2, T3, T4) via networks (N1, N2, N3, N4) and a playback duration of said preamble sequence, the method being **characterized in that**, at said terminal operating in the first mode of operation, it involves the steps of :
- Receiving (SR1) said first and second association (A1, A2) simultaneously from said server via said single network (N3);
- Extracting (SR10) said preamble sequence (PS) playback duration and said estimations (DDE1, DDE2, DDE3, DDE4) from said one of said first or second association (A1, A2);
- Identifying (SR100) said single network (N3) through which said terminal (T3) is receiving said first and said second association (A1, A2);
- Evaluating (SR1000) a local temporization duration (LTD3) from the largest estimation (DDE1) and the estimation (DDE3) corresponding to said identified single network (N3);
- Playing-back (SR10000) the preamble sequence (PS) received via said first association (A1), during said local temporization duration (LTD3) said step of playing-back starts at a reception date of said first and second association and is followed by;
- Playing-back (SR10001) successively and continuously said second association (A2);
and **in that** at said terminal operating in the second mode of operation, it involves the steps of:
- Receiving (SR1) said first association (A1) via said single network (N3);
- Playing-back successively and continuously said first association (A1).

6. Method according to claim 5, wherein said step of extracting (SR10) further comprises extracting from said one of said first or second association (A1, A2) an arbitrary duration value (T), wherein said step of evaluating (SR1000) of local temporization duration (LTD3) comprises assigning to the local temporization duration (LTD3) a value equal to the sum of said arbitrary value (T) with a difference between the largest estimation (DDE1) and the estimation (DDE3).

7. Method according to any one of claims 5 to 6, wherein said step of playing back (SR10001) said second association (A2) ends at the end of a time period whose duration is equal to the content (CNT) playback duration plus the preamble sequence (PS) playback duration minus said local temporization duration (LTD3).

8. Terminal (T3) for playing back a content (CNT), said terminal operating according to at least one of a first mode of operation and a second mode of operation, said terminal receiving said content (CNT) from a server (S) through a first association (A1) and a second association (A2) through a single network (N3), said first association (A1) gathering a preamble sequence (PS) and said content (CNT) both adapted for being played-back by said terminal (T3), said preamble sequence (PS) being temporally positioned in said first association (A1) such that said terminal (T3) plays back successively and continuously said preamble sequence (PS) and said content (CNT), said second association (A2) gathering said content (CNT) and an ending sequence (ES) adapted for being played-back, said ending sequence (ES) being temporally positioned in said second association (A2) such that said terminal (T3) plays-back successively and continuously said content (CNT) and said ending sequence (ES), and one of said first or second association (A1, A2) further comprises estimations (DDE1, DDE2, DDE3, DDE4) of data delivery duration from said server (S) to terminals (T1, T2, T3, T4) via networks (N1, N2, N3, N4) and a preamble sequence (PS) playback duration,, wherein said terminal, operating in the second mode of operation, comprises :
- Means for receiving said first and second association (A1, A2) simultaneously from said server via said network (N3);
- Means for extracting the preamble sequence (PS) playback duration and said estimations (DDE1, DDE2, DDE3, DDE4) from said one of said first or second association (A1, A2);
- Means for identifying the network (N3) through which said terminal (T3) is receiving said first and second association (A1, A2);
- Means for evaluating a local temporization duration (LTD3) from the largest estimation (DDE1) and the estimation (DDE3) corresponding to said identified network (N3) to compensate the differences between the estimations (DDE1, DDE2, DDE3, DDE4) of data delivery duration to the terminals;
- Means for playing-back an introductory temporization program (P3) or the preamble sequence (PS) from a starting reception date of first and said second association (A1, A2) during the local temporization duration (LTD3);
- Means for playing-back successively and continuously said second association (A2) after the local temporization duration;
and wherein said terminal, operating in the first mode of operation, comprises:
- Means for receiving said first association (A1) via said network (N3);
- Means for playing-back successively and continuously said first association (A1).

9. Terminal (T3) according to claim 8, wherein, it interrupts playing back said second association (A2) at a date corresponding to said starting reception date plus the content (CNT) playback duration plus the preamble sequence (PS) playback duration minus said local temporization duration (LTD3).

10. A system comprising at least two terminals (T1, T2, T3, T4) for playing back a content (CNT), said at least two terminals (T1, T2, T3, T4) being connected through at least one network (N1, N2, N3, N4) to a server (S), delivering said content, said at least two terminals (T1, T2, T3, T4) operating according to at least one of a first mode of operation and a second mode of operation, and receiving said content (CNT) from said server (S) through a first association (A1) and a second association (A2) through a single network (N3), said first association (A1) gathering a preamble sequence (PS) and said content (CNT) both adapted for being played-back by said at least two terminals (T1, T2, T3, T4), said preamble sequence (PS) being temporally positioned in said first association (A1) such that said at least two terminals (T1, T2, T3, T4) play back successively and continuously said preamble sequence (PS) and said content (CNT), said second association (A2) gathering said content (CNT) and an ending sequence (ES) adapted for being played-back, said ending sequence (ES) being temporally positioned in said second association (A2) such that said at least two terminals (T1, T2, T3, T4) play-back successively and continuously said content (CNT) and said ending sequence (ES), and one of said first or second association (A1, A2) further comprises estimations (DDE1, DDE2, DDE3, DDE4) of data delivery duration from said server (S) to terminals (T1, T2, T3, T4) via networks (N1, N2, N3, N4) and a preamble sequence (PS) playback duration allowing said at least two terminals (T1, T2, T3, T4) to evaluate a local temporization duration for playing-back synchronously said content,
each of said at least two terminals, operating in the second mode of operation, comprising :
- Means for receiving said first association (A1) via said network (N3);
- Means for playing-back successively and continuously said first association (A1);
each of said at least two terminals, operating in the first mode of operation, comprising :
- Means for receiving said first and second association (A1, A2) simultaneously from said server via said network (N3);
- Means for extracting the preamble sequence (PS) playback duration and said estimations (DDE1, DDE2, DDE3, DDE4) from said one of said first or second association (A1, A2);
- Means for identifying the network (N3) through which said terminal (T3) is receiving said first and second association (A1, A2);
- Means for evaluating a local temporization duration (LTD3) from the largest estimation (DDE1) and the estimation (DDE3) corresponding to said identified network (N3);
- Means for playing-back an introductory temporization program (P3) from a starting reception date of first and said second association (A1, A2) during the local temporization duration (LTD3);
- Means for playing-back successively and continuously said second association (A2) after the local temporization duration.

## Patentansprüche

1. Verfahren zum Liefern eines Inhalts (CNT) an mindestens zwei Endgeräte (T1, T2, T3, T4) zur Wiedergabe des Inhalts (CNT) auf den mindestens zwei Endgeräten (T1, T2, T3, T4), wobei jedes von mindestens zwei Endgeräten (T1, T2, T3, T4) über einen Server (S) über mindestens ein Netz (N1, N2, N3, N4) verbunden ist, und Betreiben in Übereinstimmung mit einer ersten Betriebsart und/oder einer zweiten Betriebsart, **dadurch gekennzeichnet, dass** das Verfahren bei dem Server (S) die folgenden Schritte umfasst:
- Bereitstellen (ST10) einer ersten Zuordnung (A1) des Inhalts (CNT) zu einer Präambelsequenz (PS), wobei die Präambelsequenz (PS) in der ersten Zuordnung (A1) in der Weise zeitlich positioniert ist, dass ein Endgerät (T1, T2, T3, T4), das die erste Zuordnung (A1) wiedergibt, die Präambelsequenz (PS) und den Inhalt (CNT) aufeinanderfolgend und ununterbrochen wiedergibt;
- Bereitstellen (ST11) einer zweiten Zuordnung (A2) des Inhalts (CNT) zu einer Endsequenz (ES), wobei die Endsequenz (ES) in der zweiten Zuordnung (A2) in der Weise zeitlich positioniert ist, dass ein Endgerät (T1, T2, T3, T4), das die zweite Zuordnung (A2) wiedergibt, den Inhalt (CNT) und die Endsequenz (ES) aufeinanderfolgend und ununterbrochen wiedergibt;
- Bereitstellen (ST100) von Schätzwerten (DDE1, DDE2, DDE3, DDE4) der Datenlieferungsdauer von dem Server (S) an jedes der mindestens zwei Endgeräte (T1, T2, T3, T4) über das mindestens eine Netz (N1, N2, N3, N4) und einer Wiedergabedauer der Präambelsequenz (PS) in der ersten und/oder in der zweiten Zuordnung (A1, A2);
- Liefern (ST1000) der ersten Zuordnung (A1) und der zweiten Zuordnung (A2) gleichzeitig an jedes der mindestens zwei Endgeräte (T1, T2, T3, T4) über ein einzelnes jeweiliges Netz unter dem mindestens einen Netz (N1, N2, N3, N4);
wobei die Wiedergabedauer der Präambelsequenz (PS) größer oder gleich der größten Differenz zwischen den Schätzwerten (DDE1, DDE2, DDE3, DDE4) ist,
wobei jedes Endgerät, das in Übereinstimmung mit der ersten Betriebsart arbeitet, bei Empfang der ersten Zuordnung die Schätzwerte der Datenlieferungsdauer verwendet, um eine lokale Abwartedauer zu bestimmen und die Präambelsequenz der ersten Zuordnung für die lokale Abwartedauer, gefolgt von der zweiten Zuordnung, aufeinanderfolgend und ununterbrochen wiederzugeben,
wobei die Endgeräte, die in Übereinstimmung mit der zweiten Betriebsart arbeiten, bei Empfang der ersten Zuordnung die erste Zuordnung wiedergeben, und wobei die lokale Abwartedauer dafür berechnet wird, die Differenzen zwischen den Schätzwerten (DDE1, DDE2, DDE3, DDE4) der Datenlieferungsdauer an die mindestens zwei Endgeräte zu kompensieren.

2. Verfahren nach Anspruch 1, wobei die Präambelsequenz (PS) und die Endsequenz (ES) eine gleiche Wiedergabedauer besitzen.

3. Verfahren nach einem der Ansprüche 1 bis 2, wobei die Präambelsequenz (PS), die Endsequenz (ES) und der Inhalt (CNT) Audioprogramme oder Programme, die Audio und Video kombinieren, sind.

4. Verfahren nach einem der Ansprüche 1 bis 3, wobei es einen Schritt des Bereitstellens (ST100) eines beliebigen Dauerwerts (τ) in der ersten und/oder in der zweiten Zuordnung (A1, A2) umfasst.

5. Verfahren zum Wiedergeben eines Inhalts (CNT) durch ein Endgerät (T1, T2, T3, T4), das über mindestens ein Netz (N1, N2, N3, N4) mit einem Server (S), der den Inhalt (CNT) liefert, verbunden ist, wobei das Endgerät (T1, T2, T3, T4) in Übereinstimmung mit einer ersten Betriebsart und/oder mit einer zweiten Betriebsart arbeitet, wobei das Endgerät (T1, T2, T3, T4) über ein einzelnes Netz (N1, N2, N3, N4) eine erste Zuordnung (A1) und eine zweite Zuordnung (A2) empfängt, wobei die erste Zuordnung (A1) eine Präambelsequenz (PS) und den Inhalt (CNT) erfasst, wobei die Präambelsequenz (PS) in der ersten Zuordnung (A1) in der Weise zeitlich positioniert ist, dass das Endgerät (T1, T2, T3, T4), wenn es die erste Zuordnung (A1) wiedergibt, die Präambelsequenz (PS) und den Inhalt (CNT) aufeinanderfolgend und ununterbrochen wiedergibt, wobei die zweite Zuordnung (A2) den Inhalt (CNT) und eine Endsequenz (ES) erfasst, wobei die Endsequenz (ES) in der zweiten Zuordnung (A2) in der Weise zeitlich positioniert ist, dass das Endgerät (T1, T2, T3, T4), wenn es die zweite Zuordnung (A2) wiedergibt, den Inhalt (CNT) und die Endsequenz (ES) aufeinanderfolgend und ununterbrochen wiedergibt, wobei die erste oder die zweite Zuordnung (A1, A2) ferner Schätzwerte (DDE1, DDE2, DDE3, DDE4) der Datenlieferungsdauer von dem Server (S) an Endgeräte (T1, T2, T3, T4) über Netze (N1, N2, N3, N4) und eine Wiedergabedauer der Präambelsequenz umfasst, wobei das Verfahren **dadurch gekennzeichnet ist, dass** es bei dem Endgerät, das in der ersten Betriebsart arbeitet, die folgenden Schritte umfasst:
- Empfangen (SR1) der ersten und der zweiten Zuordnung (A1, A2) gleichzeitig von dem Server über das einzelne Netz (N3);
- Auskoppeln (SR10) der Präambelsequenz-Wiedergabedauer (PS-Wiedergabedauer) und der Schätzwerte (DDE1, DDE2, DDE3, DDE4) von der ersten oder von der zweiten Zuordnung (A1, A2);
- Identifizieren (SR100) des einzelnen Netzes (N3), über das das Endgerät (T3) die erste und die zweite Zuordnung (A1, A2) empfängt;
- Auswerten (SR1000) einer lokalen Abwartedauer (LTD3) aus dem größten Schätzwert (DDE1) und aus dem Schätzwert (DDE3), der dem identifizierten einzelnen Netz (N3) entspricht;
- Wiedergeben (SR10000) der Präambelsequenz (PS), die über die erste Zuordnung (A1) empfangen wird, während der lokalen Abwartedauer (LTD3), wobei der Schritt des Wiedergebens mit einem Empfangszeitpunkt der ersten und der zweiten Zuordnung beginnt, und worauf Folgendes folgt:
- aufeinanderfolgendes und ununterbrochenes Wiedergeben (SR10001) der zweiten Zuordnung (A2);
und dadurch, dass das Verfahren bei dem Endgerät, das in der zweiten Betriebsart arbeitet, die folgenden Schritte umfasst:
- Empfangen (SR1) der ersten Zuordnung (A1) über das einzelne Netz (N3);
- aufeinanderfolgendes und ununterbrochenes Wiedergeben der ersten Zuordnung (A1).

6. Verfahren nach Anspruch 5, wobei der Schritt des Auskoppelns (SR10) ferner das Auskoppeln eines beliebigen Dauerwerts (τ) aus der ersten oder aus der zweiten Zuordnung (A1, A2) umfasst, wobei der Schritt des Auswertens (SR1000) der lokalen Abwartedauer (LTD3) das Zuweisen eines Werts, der gleich der Summe des beliebigen Werts (τ) mit einer Differenz zwischen dem größten Schätzwert (DDE1) und dem Schätzwert (DDE3) ist, zu der lokalen Abwartedauer (LTD3)umfasst.

7. Verfahren nach einem der Ansprüche 5 bis 6, wobei der Schritt des Wiedergebens (SR10001) der zweiten Zuordnung (A2) am Ende einer Zeitdauer, deren Dauer gleich der Inhaltswiedergabedauer (CNT-Wiedergabedauer) plus der Präambelsequenz-Wiedergabedauer (PS-Wiedergabedauer) minus der lokalen Abwartedauer (LTD3) ist, endet.

8. Endgerät (T3) zum Wiedergeben eines Inhalts (CNT), wobei das Endgerät in Übereinstimmung mit einer ersten Betriebsart und/oder mit einer zweiten Betriebsart arbeitet, wobei das Endgerät den Inhalt (CNT) von einem Server (S) über eine erste Zuordnung (A1) und eine zweite Zuordnung (A2) über ein einzelnes Netz (N3) empfängt, wobei die erste Zuordnung (A1) eine Präambelsequenz (PS) und den Inhalt (CNT) erfasst, die beide dafür ausgelegt sind, durch das Endgerät (T3) wiedergegeben zu werden, wobei die Präambelsequenz (PS) in der ersten Zuordnung (A1) in der Weise zeitlich positioniert ist, dass das Endgerät (T3) die Präambelsequenz (PS) und den Inhalt (CNT) aufeinanderfolgend und ununterbrochen wiedergibt, wobei die zweite Zuordnung (A2) den Inhalt (CNT) und eine Endsequenz (ES), die dafür ausgelegt ist, wiedergegeben zu werden, erfasst, wobei die Endsequenz (ES) in der zweiten Zuordnung (A2) in der Weise zeitlich positioniert ist, dass das Endgerät (T3) den Inhalt (CNT) und die Endsequenz (ES) aufeinanderfolgend und ununterbrochen wiedergibt, und wobei die erste oder die zweite Zuordnung (A1, A2) ferner Schätzwerte (DDE1, DDE2, DDE3, DDE4) der Datenlieferungsdauer von dem Server (S) an Endgeräte (T1, T2, T3, T4) über Netze (N1, N2, N3, N4) und eine Präambelsequenz-Wiedergabedauer (PS-Wiedergabedauer) umfasst, wobei das Endgerät, das in der zweiten Betriebsart arbeitet, umfasst:
- ein Mittel zum Empfangen der ersten und der zweiten Zuordnung (A1, A2) gleichzeitig von dem Server über das Netz (N3);
- ein Mittel zum Auskoppeln der Präambelsequenz-Wiedergabedauer (PS-Wiedergabedauer) und der Schätzwerte (DDE1, DDE2, DDE3, DDE4) von der ersten und/oder von der zweiten Zuordnung (A1, A2);
- ein Mittel zum Identifizieren des Netzes (N3), über das das Endgerät (T3) die erste und die zweite Zuordnung (A1, A2) empfängt;
- ein Mittel zum Auswerten einer lokalen Abwartedauer (LTD3) aus dem größten Schätzwert (DDE1) und aus dem Schätzwert (DDE3), der dem identifizierten Netz (N3) entspricht, um die Differenzen zwischen den Schätzwerten (DDE1, DDE2, DDE3, DDE4) der Datenlieferungsdauer an die Endgeräte zu kompensieren;
- ein Mittel zum Wiedergeben eines einleitenden Abwarteprogramms (P3) oder der Präambelsequenz (PS) von einem Anfangsempfangszeitpunkt der ersten und der zweiten Zuordnung (A1, A2) während der lokalen Abwartedauer (LTD3);
- ein Mittel zum aufeinanderfolgenden und ununterbrochenen Wiedergeben der zweiten Zuordnung (A2) nach der lokalen Abwartedauer;
und wobei das Endgerät, das in der ersten Betriebsart arbeitet, umfasst:
- ein Mittel zum Empfangen der ersten Zuordnung (A1) über das Netz (N3);
- ein Mittel zum aufeinanderfolgenden und ununterbrochen Wiedergeben der ersten Zuordnung (A1).

9. Endgerät (T3) nach Anspruch 8, wobei es das Wiedergeben der zweiten Zuordnung (A2) zu einem Zeitpunkt, der dem Anfangsempfangszeitpunkt plus der Inhaltswiedergabedauer (CNT-Wiedergabedauer) plus der Präambelsequenz-Wiedergabedauer (PS-Wiedergabedauer) minus der lokalen Abwartedauer (LTD3) entspricht, unterbricht.

10. System, das mindestens zwei Endgeräte (T1, T2, T3, T4) zum Wiedergeben eines Inhalts (CNT) umfasst, wobei die mindestens zwei Endgeräte (T1, T2, T3, T4) über mindestens ein Netz (N1, N2, N3, N4) mit einem Server (S), der den Inhalt liefert, verbunden sind, wobei die mindestens zwei Endgeräte (T1, T2, T3, T4) in Übereinstimmung mit einer ersten Betriebsart und/oder mit einer zweiten Betriebsart arbeiten und den Inhalt (CNT) von dem Server (S) über eine erste Zuordnung (A1) und eine zweite Zuordnung (A2) über ein einzelnes Netz (N3) empfangen, wobei die erste Zuordnung (A1) eine Präambelsequenz (PS) und den Inhalt (CNT), die beide dafür ausgelegt sind, durch die mindestens zwei Endgeräte (T1, T2, T3, T4) wiedergegeben zu werden, erfasst, wobei die Präambelsequenz (PS) in der ersten Zuordnung (A1) in der Weise zeitlich positioniert ist, dass die mindestens zwei Endgeräte (T1, T2, T3, T4) die Präambelsequenz (PS) und den Inhalt (CNT) aufeinanderfolgend und ununterbrochen wiedergeben, wobei die zweite Zuordnung (A2) den Inhalt (CNT) und eine Endsequenz (ES), die dafür ausgelegt ist, wiedergegeben zu werden, erfasst, wobei die Endsequenz (ES) in der zweiten Zuordnung (A2) in der Weise zeitlich positioniert ist, dass die mindestens zwei Endgeräte (T1, T2, T3, T4) den Inhalt (CNT) und die Endsequenz (ES) aufeinanderfolgend und ununterbrochen wiedergeben, und wobei die erste oder die zweite Zuordnung (A1, A2) ferner Schätzwerte (DDE1, DDE2, DDE3, DDE4) der Datenlieferungsdauer von dem Server (S) an Endgeräte (T1, T2, T3, T4) über Netze (N1, N2, N3, N4) und eine Präambelsequenz-Wiedergabedauer (PS-Wiedergabedauer), die ermöglicht, dass die mindestens zwei Endgeräte (T1, T2, T3, T4) eine lokale Abwartedauer zum synchronen Wiedergeben des Inhalts auswerten, umfasst,
wobei jedes der mindestens zwei Endgeräte, die in der zweiten Betriebsart arbeiten, umfasst:
- ein Mittel zum Empfangen der ersten Zuordnung (A1) über das Netz (N3);
- ein Mittel zum aufeinanderfolgenden und ununterbrochen Wiedergeben der ersten Zuordnung (A1);
wobei jedes der mindestens zwei Endgeräte, die in der ersten Betriebsart arbeiten, umfasst:
- ein Mittel zum gleichzeitigen Empfangen der ersten und der zweiten Zuordnung (A1, A2) von dem Server über das Netz (N3);
- ein Mittel zum Auskoppeln der Präambelsequenz-Wiedergabedauer (PS-Wiedergabedauer) und der Schätzwerte (DDE1, DDE2, DDE3, DDE4) von der ersten oder von der zweiten Zuordnung (A1, A2);
- ein Mittel zum Identifizieren des Netzes (N3), über das das Endgerät (T3) die erste und die zweite Zuordnung (A1, A2) empfängt;
- ein Mittel zum Auswerten einer lokalen Abwartedauer (LTD3) aus dem größten Schätzwert (DDE1) und aus dem Schätzwert (DDE3), der dem identifizierten Netz (N3) entspricht;
- ein Mittel zum Wiedergeben eines einleitenden Abwarteprogramms (P3) von einem Anfangsempfangszeitpunkt der ersten und der zweiten Zuordnung (A1, A2) während der lokalen Abwartedauer (LTD3);
- ein Mittel zum aufeinanderfolgenden und ununterbrochenen Wiedergeben der zweiten Zuordnung (A2) nach der lokalen Abwartedauer.

## Revendications

1. Procédé pour la fourniture d'un contenu (CNT) à au moins deux terminaux (T1, T2, T3, T4) pour la lecture dudit contenu (CNT) sur lesdits au moins deux terminaux (T1, T2, T3, T4), chacun des au moins deux terminaux (T1, T2, T3, T4) étant connecté sur un serveur (S) via au moins un réseau (N1, N2, N3, N4) et fonctionnant selon au moins l'un d'un premier mode de fonctionnement et d'un deuxième mode de fonctionnement, **caractérisé en ce que**, au niveau dudit serveur (S), il implique les étapes suivantes :
- la fourniture (ST10) d'une première association (A1) dudit contenu (CNT) à une séquence de préambule (PS), ladite séquence de préambule (PS) étant temporellement positionnée dans ladite première association (A1) de sorte qu'un terminal (T1, T2, T3, T4) lisant ladite première association (A1) lise de façon successive et continue ladite séquence de préambule (PS) et ledit contenu (CNT) ;
- la fourniture (ST11) d'une deuxième association (A2) dudit contenu (CNT) à une séquence de fin (ES), ladite séquence de fin (ES) étant temporellement positionnée dans ladite deuxième association (A2) de sorte qu'un terminal (T1, T2, T3, T4) lisant ladite deuxième association (A2) lise de façon successive et continue ledit contenu (CNT) et ladite séquence de fin (ES) ;
- la fourniture (ST100) d'estimations (DDE1, DDE2, DDE3, DDE4) de la durée de fourniture de données à partir dudit serveur (S) à chacun des au moins deux terminaux (T1, T2, T3, T4) via ledit au moins un réseau (N1, N2, N3, N4), et d'une durée de lecture de ladite séquence de préambule (PS) dans au moins l'une desdites première et deuxième associations (A1, A2) ;
- la fourniture (ST1000) desdites première association (A1) et deuxième association (A2) simultanément à chacun desdits au moins deux terminaux (T1, T2, T3, T4), via un réseau respectif unique dans ledit au moins un réseau (N1, N2, N3, N4) ;
dans lequel ladite durée de lecture de la séquence de préambule (PS) est supérieure ou égale à la plus grande différence entre lesdites estimations (DDE1, DDE2, DDE3, DDE4),
dans lequel chaque terminal fonctionnant selon ledit premier mode de fonctionnement, à la réception de la première association, utilise lesdites estimations de la durée de fourniture de données pour déterminer une durée de temporisation locale et lire de façon successive et continue ladite séquence de préambule de la première association pour ladite durée de temporisation locale suivie de ladite deuxième association,
dans lequel les terminaux fonctionnant selon le deuxième mode de fonctionnement, à la réception de la première association, lisent la première association, et dans lequel la durée de temporisation locale est calculée pour compenser les différences entre les estimations (DDE1, DDE2, DDE3, DDE4) de la durée de fourniture de données aux au moins deux terminaux.

2. Procédé selon la revendication 1, dans lequel ladite séquence de préambule (PS) et ladite séquence de fin (ES) ont une durée de lecture identique.

3. Procédé selon l'une quelconque des revendications 1 à 2, dans lequel ladite séquence de préambule (PS), ladite séquence de fin (ES) et ledit contenu (CNT) sont des programmes audio ou des programmes combinant audio et vidéo.

4. Procédé selon l'une quelconque des revendications 1 à 3, dans lequel est impliquée une étape de fourniture (ST100) d'une valeur de durée arbitraire (t) dans ladite au moins une desdites première et deuxième associations (A1, A2).

5. Procédé pour la lecture d'un contenu (CNT) par un terminal (T1, T2, T3, T4) connecté sur au moins un réseau (N1, N2, N3, N4) à un serveur (S) fournissant ledit contenu (CNT), ledit terminal (T1, T2, T3, T4) fonctionnant selon au moins l'un d'un premier mode de fonctionnement et d'un deuxième mode de fonctionnement, ledit terminal (T1, T2, T3, T4) recevant via un réseau unique (N1, N2, N3, N4) une première association (A1) et une deuxième association (A2), ladite première association (A1) regroupant une séquence de préambule (PS) et ledit contenu (CNT), ladite séquence de préambule (PS) étant temporellement positionnée dans ladite première association (A1) de sorte que, lorsque ledit terminal (T1, T2, T3, T4) lit ladite première association (A1), il lise de façon successive et continue ladite séquence de préambule (PS) et ledit contenu (CNT), ladite deuxième association (A2) regroupant ledit contenu (CNT) et une séquence de fin (ES), ladite séquence de fin (ES) étant temporellement positionnée dans ladite deuxième association (A2) de sorte que, lorsque ledit terminal (T1, T2, T3, T4) lit ladite deuxième association (A2), il lise de façon successive et continue ledit contenu (CNT) et ladite séquence de fin (ES), dans lequel l'une de ladite première ou deuxième association (A1, A2) comprend en outre des estimations (DDE1, DDE2, DDE3, DDE4) de la durée de fourniture de données à partir dudit serveur (S) aux terminaux (T1, T2, T3, T4) via des réseaux (N1, N2, N3, N4) et une durée de lecture de ladite séquence de préambule, le procédé étant **caractérisé en ce que**, au niveau dudit terminal fonctionnant dans le premier mode de fonctionnement, il implique les étapes suivantes :
- la réception (SR1) desdites première et deuxième associations (A1, A2) simultanément à partir dudit serveur via ledit réseau unique (N3) ;
- l'extraction (SR10) de ladite durée de lecture de la séquence de préambule (PS) et desdites estimations (DDE1, DDE2, DDE3, DDE4) de ladite une de ladite première ou deuxième association (A1, A2) ;
- l'identification (SR100) dudit réseau unique (N3) via lequel ledit terminal (T3) reçoit ladite première et ladite deuxième associations (A1, A2) ;
- l'évaluation (SR1000) d'une durée de temporisation locale (LTD3) à partir de l'estimation la plus importante (DDE1) et de l'estimation (DDE3) correspondant audit réseau unique identifié (N3) ;
- la lecture (SR10000) de la séquence de préambule (PS) reçue via ladite première association (A1) pendant ladite durée de temporisation locale (LTD3), ladite étape de lecture démarrant à une date de réception desdites première et deuxième associations et étant suivie de :
- la lecture (SR10001) successive et continue de ladite deuxième association (A2) ; et **en ce que**, au niveau dudit terminal fonctionnant dans le deuxième mode de fonctionnement, il implique les étapes suivantes :
- la réception (SR1) de ladite première association (A1) via ledit réseau unique (N3) ;
- la lecture successive et continue de ladite première association (A1).

6. Procédé selon la revendication 5, dans lequel ladite étape d'extraction (SR10) comprend en outre l'extraction de ladite une de ladite première ou deuxième association (A1, A2) d'une valeur de durée arbitraire (t), dans lequel ladite étape d'évaluation (SR1000) de la durée de temporisation locale (LTD3) comprend l'attribution à la durée de temporisation locale (LTD3) d'une valeur égale à la somme de ladite valeur arbitraire (t) avec une différence entre l'estimation la plus importante (DDE1) et l'estimation (DDE3).

7. Procédé selon l'une quelconque des revendications 5 à 6, dans lequel ladite étape de lecture (SR10001) de ladite deuxième association (A2) se termine à la fin d'une période temporelle dont la durée est égale à la durée de lecture du contenu (CNT) plus la durée de lecture de la séquence de préambule (PS) moins ladite durée de temporisation locale (LTD3).

8. Terminal (T3) pour la lecture d'un contenu (CNT), ledit terminal fonctionnant selon au moins l'un d'un premier mode de fonctionnement et d'un deuxième mode de fonctionnement, ledit terminal recevant ledit contenu (CNT) à partir d'un serveur (S) via une première association (A1) et une deuxième association (A2) via un réseau unique (N3), ladite première association (A1) regroupant une séquence de préambule (PS) et ledit contenu (CNT), les deux étant adaptés pour être lus par ledit terminal (T3), ladite séquence de préambule (PS) étant temporellement positionnée dans ladite première association (A1) de sorte que ledit terminal (T3) lise de façon successive et continue ladite séquence de préambule (PS) et ledit contenu (CNT), ladite deuxième association (A2) regroupant ledit contenu (CNT) et une séquence de fin (ES) adaptés pour être lus, ladite séquence de fin (ES) étant temporellement positionnée dans ladite deuxième association (A2) de sorte que ledit terminal (T3) lise de façon successive et continue ledit contenu (CNT) et ladite séquence de fin (ES), et l'une de ladite première ou deuxième association (A1, A2) comprend en outre des estimations (DDE1, DDE2, DDE3, DDE4) de la durée de fourniture de données à partir dudit serveur (S) aux terminaux (T1, T2, T3, T4) via des réseaux (N1, N2, N3, N4) et une durée de lecture de la séquence de préambule (PS), dans lequel ledit terminal, fonctionnant dans le deuxième mode de fonctionnement, comprend :
- des moyens pour recevoir lesdites première et deuxième associations (A1, A2) simultanément à partir dudit serveur via ledit réseau (N3) ;
- des moyens pour extraire la durée de lecture de la séquence de préambule (PS) et lesdites estimations (DDE1, DDE2, DDE3, DDE4) de ladite une de ladite première ou deuxième association (A1, A2) ;
- des moyens pour identifier le réseau (N3) via lequel ledit terminal (T3) reçoit lesdites première et deuxième associations (A1, A2) ;
- des moyens pour évaluer une durée de temporisation locale (LTD3) à partir de l'estimation la plus importante (DDE1) et de l'estimation (DDE3) correspondant audit réseau identifié (N3) pour compenser les différences entre les estimations (DDE1, DDE2, DDE3, DDE4) de la durée de fourniture de données aux terminaux ;
- des moyens pour lire un programme de temporisation d'introduction (P3) ou la séquence de préambule (PS) à partir d'une date de réception de départ de la première et de ladite deuxième associations (A1, A2) pendant la durée de temporisation locale (LTD3) ;
- des moyens pour lire de façon successive et continue ladite deuxième association (A2) après la durée de temporisation locale ;
et dans lequel ledit terminal, fonctionnant dans le premier mode de fonctionnement, comprend :
- des moyens pour recevoir ladite première association (A1) via ledit réseau (N3) ;
- des moyens pour lire de façon successive et continue ladite première association (A1).

9. Terminal (T3) selon la revendication 8, qui interrompt la lecture de ladite deuxième association (A2) à une date correspondant à ladite date de réception de départ plus la durée de lecture du contenu (CNT) plus la durée de lecture de la séquence de préambule (PS) moins ladite durée de temporisation locale (LTD3).

10. Système comprenant au moins deux terminaux (T1, T2, T3, T4) pour la lecture d'un contenu (CNT), lesdits au moins deux terminaux (T1, T2, T3, T4) étant connectés via au moins un réseau (N1, N2, N3, N4) à un serveur (S), fournissant ledit contenu, lesdits au moins deux terminaux (T1, T2, T3, T4) fonctionnant selon au moins l'un d'un premier mode de fonctionnement et d'un deuxième mode de fonctionnement, et la réception dudit contenu (CNT) à partir dudit serveur (S) via une première association (A1) et une deuxième association (A2) via un réseau unique (N3), ladite première association (A1) regroupant une séquence de préambule (PS) et ledit contenu (CNT), les deux étant adaptés pour être lus par lesdits au moins deux terminaux (T1, T2, T3, T4), ladite séquence de préambule (PS) étant temporellement positionnée dans ladite première association (A1) de sorte que lesdits au moins deux terminaux (T1, T2, T3, T4) lisent de façon successive et continue ladite séquence de préambule (PS) et ledit contenu (CNT), ladite deuxième association (A2) regroupant ledit contenu (CNT) et une séquence de fin (ES) adaptés pour être lus, ladite séquence de fin (ES) étant temporellement positionnée dans ladite deuxième association (A2) de sorte que lesdits au moins deux terminaux (T1, T2, T3, T4) lisent de façon successive et continue ledit contenu (CNT) et ladite séquence de fin (ES), et l'une de ladite première ou deuxième association (A1, A2) comprend en outre des estimations (DDE1, DDE2, DDE3, DDE4) de la durée de fourniture de données à partir dudit serveur (S) aux terminaux (T1, T2, T3, T4) via des réseaux (N1, N2, N3, N4) et une durée de lecture de la séquence de préambule (PS) permettant auxdits au moins deux terminaux (T1, T2, T3, T4) d'évaluer une durée de temporisation locale pour la lecture synchrone dudit contenu, chacun desdits au moins deux terminaux, fonctionnant dans le deuxième mode de fonctionnement, comprenant :
- des moyens pour recevoir ladite première association (A1) via ledit réseau (N3) ;
- des moyens pour lire de façon successive et continue ladite première association (A1) ;
chacun desdits au moins deux terminaux, fonctionnant dans le premier mode de fonctionnement, comprenant :
- des moyens pour recevoir lesdites première et deuxième associations (A1, A2) simultanément à partir dudit serveur via ledit réseau (N3) ;
- des moyens pour extraire la durée de lecture de la séquence de préambule (PS) et lesdites estimations (DDE1, DDE2, DDE3, DDE4) de ladite une de ladite première ou deuxième association (A1, A2) ;
- des moyens pour identifier le réseau (N3) via lequel ledit terminal (T3) reçoit lesdites première et deuxième associations (A1, A2) ;
- des moyens pour évaluer une durée de temporisation locale (LTD3) à partir de l'estimation la plus importante (DDE1) et de l'estimation (DDE3) correspondant audit réseau unique identifié (N3) ;
- des moyens pour lire un programme de temporisation d'introduction (P3) à partir d'une date de réception de départ de la première et de ladite deuxième associations (A1, A2) pendant la durée de temporisation locale (LTD3) ;
- des moyens pour lire de façon successive et continue ladite deuxième association (A2) après la durée de temporisation locale.
